# EUROPÄISCHE PATENTSCHRIFT

(11) **EP 3 707 809 B1**
(45) Veröffentlichungstag und Bekanntmachung des Hinweises auf die Patenterteilung: **05.01.2022**
(21) Anmeldenummer: 18799502.2
(22) Anmeldetag: 05.11.2018
(51) Int. Cl.: H02K 15/00, H01R 43/28, H01B 7/30, H01B 13/02, H02K 15/10, H02K 15/04

(54) **VORRICHTUNG ZUM HERSTELLEN VON LITZEN, EINE LITZE UND EINE ELEKTRISCHE MASCHINE MIT EINER DERARTIGEN LITZE**
DEVICE FOR PRODUCING STRANDED WIRES, A STRANDED WIRE AND AN ELECTRIC MACHINE HAVING SUCH A STRANDED WIRE
DISPOSITIF DE FABRICATION DE TORONS, TORON ET MACHINE ÉLECTRIQUE COMPORTANT UN TEL TORON

(30) Priorität: 06.11.2017 DE 102017125887
(43) Veröffentlichungstag der Anmeldung: 16.09.2020
(73) Patentinhaber: Jheeco E-Drive AG, 9492 Eschen (LI)
(72) Erfinder: STÖCK, Martin, 9465 Salez (CH); BAUER, Joel, 6712 Thüringen (AT)
(74) Vertreter: Grünecker Patent- und Rechtsanwälte PartG mbB
(86) Internationale Anmeldenummer: PCT/EP2018/080177
(87) Internationale Veröffentlichungsnummer: WO 2019/086666

(56) Entgegenhaltungen:
- WO-A2-2015/162586
- JP-A- H0 919 115

## Beschreibung

Die Erfindung betrifft ein Verfahren und eine Vorrichtung zum Herstellen von Litzen, eine Litze und eine elektrische Maschine mit einer derartigen Litze.

Für Statorwicklungen von Elektromotoren sind zusammengesetzte Wicklungen bekannt. Darunter ist zu verstehen, dass die Wicklungen nicht am Stück gewickelt werden, d.h. die Wicklung kann außerhalb des Stators mit Einlegen im Nachhinein, sog. Einzugswicklung, oder direkt im Stator erfolgen, sondern Teilleiter bzw. Leitersegmente in die einzelnen Stator-Nuten eingebracht werden und hinterher zu Leiterschleifen verschalten werden, indem etwa zwei Enden zweier Leitersegmente elektrisch leitend miteinander verbunden werden. Dies kann direkt (z.B. durch direktes Verschweißen der Leitersegmente) oder indirekt (über die Zwischenschaltung eines Verbindungselements bzw. Verschaltungssteges) geschehen. Im einfachsten Falle sind solche Leitersegmente Kupferstäbe aus Vollmaterial, die nach Einlegen oder Einschieben in eine Stator-Nut an beiden Enden elektrisch leitend kontaktiert werden. Eine Alternative stellen sog. Haarnadelwicklungen (hair pin) dar, bei der zwei Leitersegmente U-förmig verbunden (und einstückig hergestellt) sind, so dass eine solche Haarnadel nur noch an einer Stator-Seite elektrisch verbunden werden muss.

Formlitzen schließlich sind eine weitere Alternative für segmentierte Leiter, bei denen die Leitersegmente nicht aus Vollmaterial, sondern aus einem verdrillten Drahtbüschel (Litze) bestehen und formverpresst (Formlitze) werden, wobei die Einzeldrähte der Litze gegeneinander isoliert sind. Die Verpressung erfolgt primär, um eine möglichst dicht kompressierte Formlitze zu erhalten, die möglichst viel Kupfer pro Nutquerschnitt besitzt, d.h. einen hohen Füllgrad und damit einen hohen effektiven Leiterquerschnitt aufweist. Im Gegensatz zu Vollmaterialstäben ist der Skin-Effekt in Drahtbüscheln deutlich kleiner. Vor dem Verpressen werden die Formlitzen zumeist verdrillt, da dies parasitären Effekten (Wirbelstromverluste) vorbeugt.

Eine Formlitze kann aus einer einzigen, d.h. "großen", verdrillten Litze oder aus einer Vielzahl von Teillitzen bestehen, die ihrerseits aus einer Anzahl von Einzeldrähten bestehen und verdrillt sind. Formlitzen sind aus der Generatortechnik bekannt, dort unter dem Namen Roebelstäbe (Verroebeln bedeutet das Verdrillen von Einzeldrähten bzw. -leitern mit rechteckigem Querschnitt).

Statorwicklungen werden außerdem gegenüber dem Stator isoliert werden. Diese Hauptisolation kann beispielsweise als Nutisolation in Form von in Statornuten eingelegtem Isolationspapier umgesetzt werden. Auch ist es möglich, Leitersegmente direkt mit einer Hauptisolation zu umspritzen.

Der Einsatz von zusammengesetzten Formlitzenwicklungen setzt nicht nur voraus, dass die Formlitzen selbst zu Leiterschleifen verbunden werden, sondern dass die Einzeldrähte jeder Formlitze im Kopfbereich elektrisch miteinander verbunden werden. Die elektrische Verbindung impliziert auch eine ausreichend feste mechanische Verbindung, die lebensdauerfest sein muss (Vibrationen und Erschütterungen).

Hierzu sind im Stand der Technik Schweiß-Verfahren wie Ultraschallschweißen oder das Elektrodenverschweißen mit Verwendung von Hülsen hinreichend bekannt. Als beispielhafter Stand der Technik wird die US 5,660,742 genannt, die ein gemischtes Verfahren zur Litzdrahtverbindung im Kopfbereich bestehend aus Ultraschall-, Elektrodenschweißen sowie Hülsenverpressen beschreibt.

Der Herstellungsprozess von Formlitzen besteht üblicherweise aus den Einzelschritten
a) Verdrillen von Einzelleitern,
b) Verpressen oder Rollwalzen zu einem rechteckigen Querschnitt,
c) Abschneiden der Endlosformlitze oder des Endloseinzeldrahtes auf die korrekte Länge,
d) Kontaktierung der Einzeldrähte im Kopfbereich jeder Formlitze,
e) Einsetzen der Fomlitze in eine Statornut,
f) Verbindung mehrerer Formlitzen zu Leiterschleifen.

Problematisch bei den bekannten Verbindungstechniken ist die Lackdrahtisolierung der Einzeldrähte im Kopfbereich, die für eine elektrische und mechanische Verbindung hinderlich ist. Im zitierten Stand der Technik wird dieser Lack im Kopfbereich durch Hitzeeinwirkung (Elektrodenschweißen) teils verbrannt, teils aufgeschmolzen und herausgepresst. Dies erfolgt jedoch nicht rückstandslos.

Nachteilhaft ist hierbei insbesondere, dass Lackreste im Endprodukt
- die mechanische Festigkeit der Verbindung herabsetzen,
- die elektrische Leitfähigkeit herabsetzen,
- die thermische Leitfähigkeit herabsetzen und
- eine hohe Streuung dieser Eigenschaften selbst bei Formlitzen aus derselben Fertigungslinie hervorrufen.

Weiterhin erschwert der Lack die Verarbeitbarkeit bei der Einzeldrahtkontaktierung, da
- der Lack den Verbindungsprozess, insbesondere Schweißprozesse aufgrund Wechselwirkung von Lichtbogen und Lackdämpfen/rauch erschwert
- der Lack keine gleichbleibende Prozessgüte gewährleistet und
- eine separate oder integrierte Absauganlage von Dämpfen bei der Einzeldrahtkontaktierungs-Maschine in unmittelbarer Nähe des Kontaktierungsvorgangs vorgehalten werden muss.

Weiterhin erschweren die Lackreste eine Weiterverarbeitbarkeit, weil
- die herausgepressten Lacküberstände entfernt werden müssen, beim kopfseitigen Herauspressen in der Regel durch Abschneiden eines Endstücks
- die herausgepressten Lacküberstände Press-, Schweiß- oder sonstige Werkzeuge verschmutzen und dadurch sowohl die Qualität der nachfolgenden Werkstücke beeinträchtigt wird als auch die Wartungsintervalle und -intensivität für die eingesetzten Werkzeuge steigt.

Der Erfindung liegt die Aufgabe zu Grunde, ein Verfahren zum Herstellen von Litzen, insbesondere Formlitze anzugeben, das einerseits prozesssicher und automatisierbar und andererseits effizient arbeitet. Der Erfindung liegt ferner die Aufgabe zu Grunde, eine entsprechende Vorrichtung zum Herstellen von Litzen, eine Litze und eine elektrische Maschine mit einer derartigen Litze anzugeben.

Erfindungsgemäß wird diese Aufgabe mit Blick auf das Verfahren durch den Gegenstand des Anspruchs 1, mit Blick auf die Vorrichtung durch den Gegenstand des Anspruchs 15, mit Blick auf die Litze durch den Gegenstand des Anspruchs 16 und mit Blick auf die elektrische Maschine durch den Gegenstand des Anspruchs 17 gelöst.

Konkret wird die Aufgabe durch ein Verfahren zum Herstellen von Litzen gelöst, das die folgenden Schritte aufweist:
a) Aufbringen einer Isolierschicht auf Leitungen
b) Vereinzeln der isolierten Leitungen
c) Individuelles Entfernen der Isolierschicht von den vereinzelten Leitungen entlang einer Teillänge der Leitungen und
d) Zusammenführen der Leitungen zur Bildung einer Litze, wobei die Teillängen zumindest abschnittsweise auf derselben Höhe zur Bildung eines nicht isolierten Kontaktbereiches angeordnet werden.

Unter Leitungen sind dabei elektrisch leitende Drähte (Einzelleiter) zu verstehen. Das Aufbringen und Entfernen der Isolierschicht bezieht sich auf die Behandlung dieser Drähte. Ein isolierter Einzelleiter kann auch als Lackdraht oder Magnetdraht angesprochen werden. Die Spannungsdifferenzen zwischen Einzelleitern einer Litze sind gegenüber Spannungsdifferenzen zwischen Segmentleiter und Stator gering. Eine Haupt- oder Nutisolation ist nicht Gegenstand der Erfindung.

Die Erfindung hat den Vorteil, dass eine abfallarme Herstellung von Litzen, insbesondere Formlitzen, auch und gerade bei kontinuierlichen Herstellungsverfahren, möglich ist. Die abfallarme Herstellung bedeutet bspw. eine Verminderung inaktiver/funktionsloser Bereiche einer Litze. Die aktive Länge einer Litze sowie der unmittelbare Kontaktierungsbereich sind funktionsbehaftet. Das Zwischenstück zwischen aktiver Länge und Kontaktierung erfüllt lediglich sekundäre Funktionen, insbesondere Kriechstrom- und Überschlagsschutz, und sollte so kurz wie möglich ausfallen.

Vorteilhaft wird für die Isolierung ein Kunststoff oder Kunstharz verwendet.

Das kontinuierliche Verseilen von Leitungen, insbesondere von Einzeldrähten, das wirtschaftlicher als eine Batch-Fertigung ist, kann durch die Erfindung ohne größere Schwierigkeiten bei der Platzierung und Auswahl geeigneter Abisolationseinrichtungen mit ausreichend hohen Prozessgeschwindigkeiten und gleichzeitiger Trennschärfe zwischen isoliertem und abisoliertem, d.h. nicht-isoliertem Bereich durchgeführt werden.

Die Erfindung umfasst neben kontinuierlichen Herstellungsverfahren, bei denen die Vorteile der Erfindung besonders zum Tragen kommen, aber auch Batch-Verfahren, also nicht-kontinuierliche Verfahren.

Unter "Aufbringen einer Isolierschicht auf Leitungen" kann auch das Bereitstellen eines bereits isolierten Drahtes (Lackdraht) verstanden werden. Der Prozessschritt kann also ausgelagert und unabhängig von den anderen Prozessschritten durchgeführt werden. Insofern Lackdraht für eine spätere Verwendung auf Drahtrollen zwischengespeichert wird, soll damit der erfindungsgemäße Gedanke nicht verlassen werden.

Unter dem individuellen Entfernen der Isolierschicht von den vereinzelten Leitungen entlang einer Teillänge der Leitungen wird eine Einzelbehandlung jeder Leitung verstanden, bei der auf eine bestimmte einzelne Leitung so eingewirkt wird, dass deren Isolationsschicht partiell, d.h. entlang einer Teillänge entfernt wird. Entfernen bedeutet dabei nicht notwendigerweise das restlose Entfernen der Isolationsschicht. Entfernen kann auch das Abtragen oder Reduzieren der Dicke der Isolationsschicht in technisch relevantem Ausmaß bedeuten. Es ist möglich, dass mehrere Einzelbehandlungen gleichzeitig durchgeführt werden, wobei eine erste Leitung individuell und wenigstens eine zweite Leitung ebenfalls individuell, d.h. im Wesentlichen unabhängig von der ersten Leitung behandelt bzw. bearbeitet wird. Jedenfalls werden die einzelnen Leitungen im Gegensatz bspw. zu einer chemischen Behandlung aller Leitungen einzeln kontrolliert bearbeitet. In diesem Zusammenhang ist auch die Vereinzelung der Leitungen zu sehen, die eine individuelle Bearbeitung der einzelnen Leitungen ermöglicht.

Zwar ist es aus der Generatortechnik bekannt, fertige Leitersegmente im Kopfbereich von der Isolation zu befreien. Hierzu wird der Endabschnitt eines Roebelstabes aufgespleißt und dann mechanisch von Hand freigebürstet. Eine solche Lösung ist für die Massenfertigung nicht praktikabel. Das gilt ebenso für die chemische Abisolation.

Leitungen können Einzeldrähte oder Teillitzen (auch Litzdrähte genannt) sein, die selbst wiederum aus Einzeldrähten aufgebaut sind. Die Erfindung umfasst Litzen im Allgemeinen und Formlitzen im Besonderen, die durch Verpressen hergestellt werden (s.o.). Unter einer Litze oder Formlitze wird das Gesamtteil verstanden, das aus mehreren Komponenten (Einzeldrähte und/oder Teillitzen) aufgebaut ist.

Nachstehende Ausführungen im Zusammenhang mit Einzeldrähten gelten auch für Teillitzen und umgekehrt.

Bevorzugte Ausführungsbeispiele sind in den Unteransprüchen angegeben.

Bei einer bevorzugten Ausführung erfolgen die Schritte a) bis d) im kontinuierlichen Betrieb. Dies hat den Vorteil, dass das Verfahren besonders wirtschaftlich durchgeführt werden kann, da das Verseilen der Leitungen, insbesondere der Einzeldrähte kontinuierlich erfolgt und die Litzen, insbesondere Formlitzen nach dem Verseilen auf die entsprechende Länge abgeschnitten werden.

Alternativ können wenigstens die Schritte c) und d) im Batchbetrieb erfolgen. Dabei erfolgt das Ablängen der Leitungen vor dem Zusammenführen, sodass die Länge der Litzen bzw. der Formlitzen bereits vor dem Zusammenführen, insbesondere dem Verseilen feststeht.

Vorzugsweise umfasst das individuelle Entfernen gemäß Schritt c) eine Laserablation der Isolierschicht, insbesondere Laserverdampfen der Isolierschicht.

Das Laserverdampfen ist besonders vorteilhaft, weil das Verfahren
a) berührungslos arbeitet und damit den fragilen Draht nicht beschädigt
b) den Isolationslack nahezu restlos verdampfen kann
c) prozesssicher ist, und
d) gut steuerbar, präzise und ausreichend reaktionsschnell ist, um komplexe Schnittmuster auszuführen, insbesondere auch, wenn Drähte mit unterschiedlichen Geschwindigkeiten den Laser passieren.

Durch des Festlegen von Zeitpunkten und Zeitlängen für Laserimpulse kann der Prozess der Abisolierungen ebenfalls gut gesteuert werden.

Bei Formlitzen für Hochvoltmotoren, insbesondere wenn diese verdrillt sind, können sehr dünne Isolationsschichten gewählt werden, da die Differenzspannung zwischen den Einzeldrähten sehr gering ausfällt (nur durch die Längenunterschiede aufgrund des Verdrillens), da alle Einzeldrähte im Kopfbereich von Anfang und Ende der Formlitze elektrisch verbunden sind und damit das gleiche Potential aufweisen. Aus diesem Grund kann die Isolationsschicht dünn gewählt werden.

Der Verwendung dünner Isolationsschichten steht der Nachteil entgegen, dass damit die Gefahr für Oberflächenverletzungen der Einzeldrähte, bzw. allgemein der Leitungen v.a. während der Verarbeitung steigt. Aus diesem Grund vermeidet der Fachmann an sich eine zu geringe Isolationsschichtdicke. Je mehr die Litzen jedoch gegeneinander verdrillt werden, desto unschädlicher werden die bei einem (oder mehreren) Kurzschlüssen innerhalb der Formlitze auftretenden induzierten Magnetfelder. Außerdem wird diesem Nachteil durch das berührungslose Laserverdampfen wirksam begegnet.

Es ist daher gleichwohl möglich, besonders dünne Isolationsschichten zu verwenden, insbesondere wenn die Anzahl der Verdrillungen, d.h. der Schläge hoch gewählt wird, insbesondere mit mehr als 3 Schlägen, bevorzugt aber mit mehr als 5 Schlägen. Die Isolationsdicke wird gewöhnlich relativ zur Drahtdicke angegeben und mit Grad 1, Grad 2 usw. bezeichnet (vgl. hierzu den internationalen Standard nach IEC 60317, Ausgabe 2013). Die erfindungsgemäße Formlitze weist daher eine Isolationsdicke auf, die im Vergleich zu einer Einzugswicklung bei einem vergleichbaren Drahtdurchmesser um eine Gradstufe kleiner gewählt werden kann, bevorzugt jedoch 2 Gradstufen kleiner. Konkret bedeutet dies, dass für einen erfindungsgemäßen Litz- oder Formlitzleiter auch bei Spannungslagen oberhalb von 600V, insbesondere oberhalb von 700V eine Isolierung mit Grad 1 gewählt werden kann.

Damit kann kostengünstig ein Herstellungsprozess mit großserientauglichen Prozessgeschwindigkeiten realisiert werden.

Es kann auch vorgesehen sein, die Isolationsschicht nur teilweise abzutragen bzw. zu reduzieren. Das heißt beispielsweise die Dicke der Isolationsschicht zu reduzieren. Beispielsweise kann die Schichtdicke um mehr als 30% oder um mehr als 50% oder um mehr als 80% reduziert werden. Schichtdicke bezeichnet bei einem runden Draht mit kreiszylindrischer Isolationsschicht die geometrische Ausdehnung in radialer Richtung.

Isolationschicht teilweise Abtragen kann aber auch bedeuten, dass im partiell abzuisolierenden Leiterabschnitt die Isolation nur stellenweise abgetragen wird. Dies ist beispielsweise bei Verwendung von Lasersublimation und hohen Drahtgeschwindigkeiten der Fall, bei der die Isolation/Isolationsmantel nur an bestimmten Stellen abgesprengt wird und an anderen Stellen intakt bleibt, so dass ein leopardenähnliches Muster mit nahezu gänzlich isolierten und nahezu gänzlich abisolierten Inseln entsteht. Beispielsweise kann die Isolationsdecke um mehr als 30% oder um mehr als 50% oder um mehr als 80% im Kontaktierungsbereich/Kopfbereich der Formlitze abgetragen werden.

Das Verhältnis von abgetragener und nicht abgetragener Isolationsschicht ergibt sich dabei insbesondere als Optimierungsprozess aus der Anzahl und/oder Leistungsfähigkeit der Abisoliereinrichtung sowie der Durchlaufgeschwindigkeit der Leiter.

Durch das teilweise Abtragen der Isolationsschicht verbleibt weniger Isolationsmaterial im Kopfende der Formlitze. So kann das elektrische und mechanische Verbinden des Kopfendes einer Formlitze gegenüber dem Stand der Technik verbessert werden. Dies ist von Vorteil, um beispielsweise höhere Prozessgeschwindigkeiten einer Verseilanlage fahren (Durchlaufgeschwindigkeiten von > 40m/s) und/oder die Leistung der Abisolationsanlage (etwa die Anzahl der Laser) reduzieren zu können.

Bei einer besonders bevorzugten Ausführungsform werden beim individuellen Entfernen gemäß Schritt c) die Leitungen seitlich voneinander beabstandet angeordnet. Dies hat Vorteile beim Entfernen der Isolationsschicht, da die Leitungen gut zugänglich sind.

Vorzugsweise werden beim individuellen Entfernen gemäß Schritt c) unterschiedlich lange, nicht isolierte Teillängen der Leitungen gebildet. Dies hat den Vorteil, dass auf einfache Weise die Positionen der nicht isolierten Teillängen zueinander so angeordnet sind, dass sich beim Zusammenführen der Leitungen der gewünschte Kontaktbereich ergibt.

Alternativ zu den unterschiedlichen langen Teillängen der Leitungen ist es möglich, beim individuellen Entfernen gemäß Schritt c) gleich lange, nicht isolierte Teillängen der Leitungen zu bilden, die versetzt angeordnet werden. Dies hat gegenüber der der Ausführung, bei der unterschiedlich lange Teillängen verwendet werden, den Vorteil, dass das Verfahren besonders abfallarm arbeitet bzw. die an der Funktion der Leitungen nicht teilnehmenden Leitungsbereiche möglichst klein gehalten werden. Dazu werden die gleich langen Teillängen versetzt angeordnet. Dadurch wird bewirkt, dass die Teillängen der einzelnen Leitungen in etwa bzw. genau auf derselben Höhe der Litze angeordnet werden, sodass sich ein einheitlicher Kontaktbereich in der Litze ergibt.

Vorzugsweise werden beim individuellen Entfernen gemäß Schritt c) unterschiedlich lange, nicht isolierte Teillängen der Leitungen durch unterschiedliche Transportgeschwindigkeiten der Leitungen beim Entfernen gebildet. Dies vereinfacht das Verfahren, da das Entfernen der Isolationsschicht stationär erfolgen kann. Der veränderbare Prozessparameter ist die Transportgeschwindigkeit der Leitungen.

Das Zusammenführen der Leitungen gemäß Schritt d) kann ein Verseilen der Leitungen umfassen. Das Verseilen bzw. Verdrillen der Leitungen ist die übliche Verbindungsart zur Verringerung parasitärer Einflüsse, wie Wirbelströme.

Bei einer bevorzugten Ausführung umfasst das Zusammenführen der Leitungen gemäß Schritt d) ein Formverpressen zur Bildung einer Formlitze. Unter Formverpressen bzw. unter Formlitze wird ein Verfahrensschritt bzw. ein Zwischenprodukt verstanden, dessen Außenform zumindest teilweise verändert wird bzw. verändert ist. Diese Ausführung hat besondere Vorteile im Zusammenhang mit der Herstellung von elektrischen Maschinen, insbesondere Statoren, bei denen die Stator-Nuten eine vorgegebene Form aufweisen, in die die Formlitze eingesetzt wird. Der Querschnitt der Stator-Nut kann beispielsweise trapezförmig sein. Andere Formquerschnitte sind möglich.

Vorzugsweise werden beim Zusammenführen der Leitungen gemäß Schritt d) die in Transportrichtung der Leitungen hinteren Enden der nicht isolierten Teillängen bündig angeordnet. Dadurch wird erreicht, dass der Kontaktbereich im Wesentlichen normal zur Längsrichtung der Litze verläuft, sodass funktionslose Bereiche minimiert werden. Dies ist nicht-trivial, sofern die Leitungen, insbesondere die Einzeldrähte und/oder Teillitzen einer Formlitze unterschiedliche Längen aufweisen. Dies kann bspw. bei Verwendung von Seelendrähten, um die weitere Drähte herumgewickelt werden, der Fall sein.

Zusätzlich oder alternativ dazu können beim Zusammenführen der Leitungen gemäß Schritt d) die in Transportrichtung der Leitungen vorderen Enden der nicht isolierten Teillängen bündig angeordnet werden. Wenn sowohl die vorderen als auch hinteren Enden der Teillängen jeweils bündig angeordnet werden, wird ein Verfahren erreicht, das praktisch keinen Ausschuss bildet. Der beim Zusammenführen der Leitungen entstehende Kontaktbereich ist an beiden Enden im Wesentlichen normal zur Längsrichtung der Litze angeordnet, so dass einerseits wenig bis gar kein Abfall und andererseits wenig bis gar keine Toträume entstehen.

Bei einem besonders bevorzugten Ausführungsbeispiel des Verfahrens bilden die in Transportrichtung der Leitungen vorderen Enden der nicht isolierten Teillängen den Beginn einer neuen Litze. Im Optimalfall entfällt dadurch der Abfall beim Zuschneiden der Litzen komplett.

Die Leitungen können mehrere Einzeldrähte und/oder Teillitzen umfassen. Damit wird klargestellt, dass das erfindungsgemäße Verfahren und die hier beschriebenen Ausführungsformen des erfindungsgemäßen Verfahrens sowohl auf die Verarbeitung von Einzeldrähten als auch auf die Verarbeitung von Teillitzen, die wiederum aus Einzeldrähten bestehen, angewandt werden können. Die für die Teillitzen verwendeten Einzeldrähte können ebenfalls erfindungsgemäß hergestellt werden.

Die Erfindung betrifft ferner eine Vorrichtung zum Herstellen von Litzen mit einer Einrichtung zum Aufbringen einer Isolierschicht auf Leitungen, einer Einrichtung zum Zusammenführen der Leitungen zur Bildung einer Litze und einer Einrichtung zum Entfernen der Isolierschicht von den Leitungen entlang einer Teillänge der Leitungen. Dabei ist vorgesehen, dass eine Einrichtung zum Vereinzeln der isolierten Leitungen vor der Einrichtung zum Entfernen der Isolierschicht angeordnet ist und die Einrichtung zum Entfernen der Isolierschicht Mittel zum individuellen Entfernen der Isolierschicht von den vereinzelten Leitungen entlang einer Teillänge der Leitungen aufweist. Die Einrichtung zum Zusammenführen der Leitungen und die Einrichtung zum Entfernen der Isolierschicht wirken derart zusammen, dass die Teillängen der Leitungen zumindest abschnittsweise auf derselben Höhe zur Bildung eines nicht isolierten Kontaktbereiches angeordnet werden. Diese Vorrichtung ist besonders für die Durchführung des erfindungsgemäßen Verfahrens geeignet.

Es kann weiterhin vorteilhaft eine Synchronisationseinrichtung vorgesehen sein, die eine Messeinrichtung und eine Verarbeitungseinheit umfasst. Die Messeinrichtung bestimmt die Länge eines abisolierten Bereiches. Dies kann beispielsweise durch Messung der elektrischen Leitfähigkeit oder durch Bildauswertung erfolgen. Die Verarbeitungseinheit bestimmt basierend auf den Messwerten der Messeinrichtung Korrekturwerte, welche sie an die Abisolierungsvorrichtung schickt. Beispielsweise kann dadurch die Pulslänge und/oder der Pulszeitpunkt eines Sublimationslasers eingestellt beziehungsweise nachgestellt werden. Dadurch können insbesondere bei hohen Draht-Durchlaufgeschwindigkeiten dauerhaft abisolierte Teilabschnitte gewünschter Länge und gleichbleibender relativer Position zueinander erzielt werden. Die Synchronisationseinrichtung kann entlang einer kontinuierlichen Fertigungslinie z.B. vor einem Verseilungsschritt positioniert sein.

Bei der Einrichtung zum Vereinzeln kann es sich beispielsweise um eine Fixierung der Leitungen auf einem Transportband handeln, die die Leitungen seitlich beabstandet (vereinzelt) hält. Allgemein wird unter Vereinzeln auch ein Fixieren vereinzelter Leitungen verstanden.

Im Rahmen der Erfindung wird ferner eine Litze mit Leitungen, die jeweils eine Isolierschicht aufweisen und auf einer Teillänge jeweils nicht isoliert sind, beansprucht, wobei die nicht isolierten Teillängen einen Kontaktbereich bilden, an dem die Leitungen elektrisch leitend miteinander verbunden sind. Die Isolierschicht ist entlang der Teillängen individuell für jeden Einzeldraht vor dem Zusammenführen der Leitungen zu einer Litze entfernt.

Außerdem wird eine elektrische Maschine mit magnetischen Bauteilen offenbart und beansprucht, die eine Vielzahl von Leitungen in Aufnahmeöffnungen eines Rotors und/oder Stators aufweist, die jeweils eine Isolierschicht aufweisen und auf einer Teillänge jeweils nicht isoliert sind. Die nicht isolierten Teillängen bilden einen Kontaktbereich, an dem die Leitungen elektrisch leitend miteinander verbunden sind, wobei die Isolierschicht entlang der Teillängen individuell für jeden Einzeldraht vor dem Zusammenführen der Leitungen zu einer Litze entfernt ist.

Die Litze kann zusätzlich eine Hauptisolation (Nutisolation) aus elektrisch isolierendem Material aufweisen. Die Hauptisolation umgibt den Litzkörper über seine aktive Länge. Sie isoliert den Litzkörper von einem Rotorblechpaket oder einem Statorblechpaket.

Die Erfindung wird nachstehend anhand von Ausführungsbeispielen mit weiteren Details unter Bezug auf die beigefügten Zeichnungen näher erläutert.

In diesen zeigen schematisch:
- Fig. 1: einen Litzdraht mit drei Lagen 1, 2, 3 aus Einzeldrähten, die gegeneinander verdrillt sind;
- Fig. 2: eine Litze oder einen Litzdraht, die bzw. der aus Teillitzen aufgebaut ist. Die Litzdrähte bzw. Teillitzen können wie hier angedeutet, unterschiedliche Verdrillungsrichtungen aufweisen. Die Litzdrähte bzw. Teillitzen können wiederum miteinander verdrillt sein;
- Fig. 3: eine Formlitze mit elektrisch und mechanisch kontaktierten Kopfbereichen mit Hülse (untere Darstellung) und ohne Hülse (obere Darstellung) in Frontal- und Draufsicht;
- Fig. 4a: eine Frontsicht eines Stators eines Elektromotors mit beispielhaft eingebrachten Formlitzen. Die Formlitzen sind hier nicht rechteckig, sondern trapezförmig. In jeder Nut befinden sich zwei Formlitzen. Um die Verschaltung zu Wicklungen zu vereinfachen, insbesondere für verteilte Wicklungen, können die Formlitzen unterschiedliche Länge aufweisen.
- Fig. 4b: eine Draufsicht des Stators gemäß Fig. 4a;
- Fig. 5a: eine Formlitze, bei der ein Draht vier vollständige "Umdrehungen", d.h. 4 Schläge macht. Die Dreiecke deuten die Schläge an. Eingezeichnete Längen sind die aktive Länge (Teil der Formlitze innerhalb der Statornut), die Schlaglänge und die Halbschlaglänge.
- Fig. 5b: einen Draht einer Formlitze in Draufsicht, der für einen Schlag einen rechteckigen Weg zurücklegen muss, der dem Umfang der Formlitze entspricht. Für einen halben Schlag ist entsprechend der halbe Weg zurückzulegen.
- Fig. 5c: die Längendifferenz, die zwischen dem direkten Weg (z.B. ein Seelendraht) und dem einen halben Schlag aufweisenden Einzeldraht entsteht. Waagrecht: Länge des direkten Weges; Senkrecht: Umweg für einen Halbschlag; Verbindungslinie: resultierende Länge. Das Lot des direkten Weges auf die resultierende Länge verdeutlicht die Längendifferenz;
- Fig. 6a: ein Ausführungsbeispiel, bei dem Einzeldrähte oder Teillitzen, d.h. allgemein Leitungen, unterschiedlicher Länge hergestellt (für die verschiedenen Lagen 1, 2 3 gemäß Fig. 1) und diese an den Enden jeweils um die gleiche Länge abisoliert werden. Beim Verdrillen sollen diese Leitungen idealerweise bündig abschließen, so dass sowohl Beginn als auch Ende der abisolierten Bereiche für alle Leitungen übereinander zu liegen kommen;
- Fig. 6b: ein weiteres Ausführungsbeispiel, bei dem alle Einzeldrähte oder Teillitzen, d.h. allgemein Leitungen, auf die gleiche Länge abgeschnitten werden, aber unterschiedlich große Abisolierbereiche aufweisen. Beim Verdrillen werden die Anfangskanten des abisolierten Bereichs zwar bündig übereinander zu liegen kommen, jedoch werden die Enden der Drähte nicht bündig miteinander abschließen, so dass hier zusätzlich geschnitten werden muss und Abfall entsteht.
- Fig. 7: eine Einzeldrahtfertigungslinie, bei welcher der (zukünftige) Lackdraht durch ein Isolationsbad läuft, der aufgebrachte Lack durch eine Trockeneinrichtung getrocknet, sodann partiell abisoliert und dann auf Länge zugeschnitten wird. Beispielhaft sind hier unterschiedliche Längen der zuzuschneidenden Einzeldrähte dargestellt (Lagen 1, 2, 3, vgl. Fig. 1);
- Fig. 8a: ein Ausführungsbeispiel einer Abisolationsvorrichtung bei Batchfertigung in einer Variante mit auf korrekte Endlänge zugeschnittenen Litzdrähten (= Fig. 6a);
- Fig. 8b: eine weitere Abisolationsvorrichtung bei Batchfertigung in einer Variante mit unterschiedlich langen Abisolationsbereichen (=Fig. 6b);
- Fig. 9a: ein Ausführungsbeispiel einer Fertigungsvariante bei kontinuierlicher Fertigung mit unterschiedlich langen Abisolationsbereichen (hier angedeutet für eine dreilagige Litze), die verdrillt, rollgewalzt und dann auf Länge zugeschnitten werden.
- Fig. 9b: eine Variante des Ausführungsbeispiels gemäß Fig. 9a, bei welcher gleichlange Abisolationsbereiche so gesetzt werden, dass diese beim Verdrillen bündig übereinander zu liegen kommen;
- Fig. 10: ein weiteres Ausführungsbeispiel einer Fertigungsvariante einer Formlitze, die aus Teillitzen zusammengesetzt ist, bei der drei Teillitzen stellvertretend für die weiteren Teillitzen der Formlitze gezeigt sind;
- Fig. 11: eine mögliche Abfolge der Herstellungsschritte eines kontinuierlichen Formlitzherstellungsverfahren bspw. gemäß Fig. 9a, 9b.
- Fig. 12: eine mögliche Abfolge der Herstellungsschritte eines Formlitzherstellungsverfahren in Batch-Fertigung bspw. gemäß Fig. 8a, 8b.

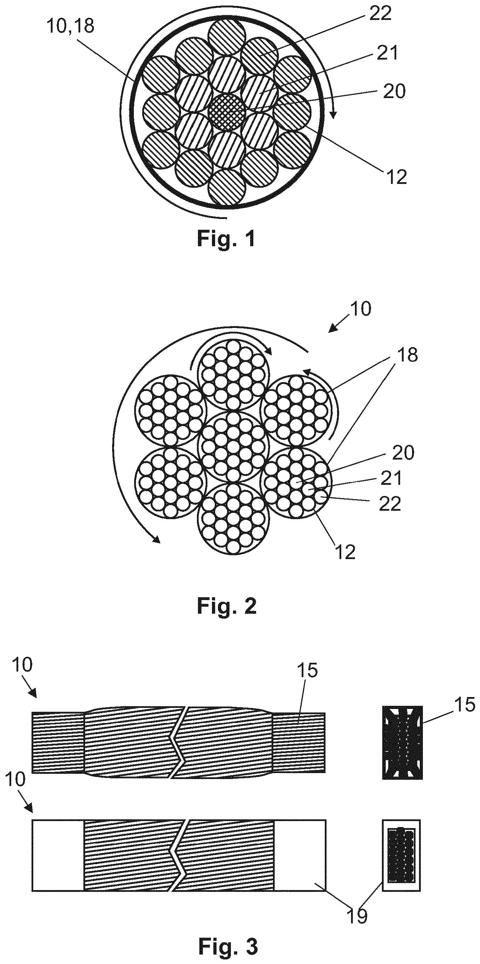

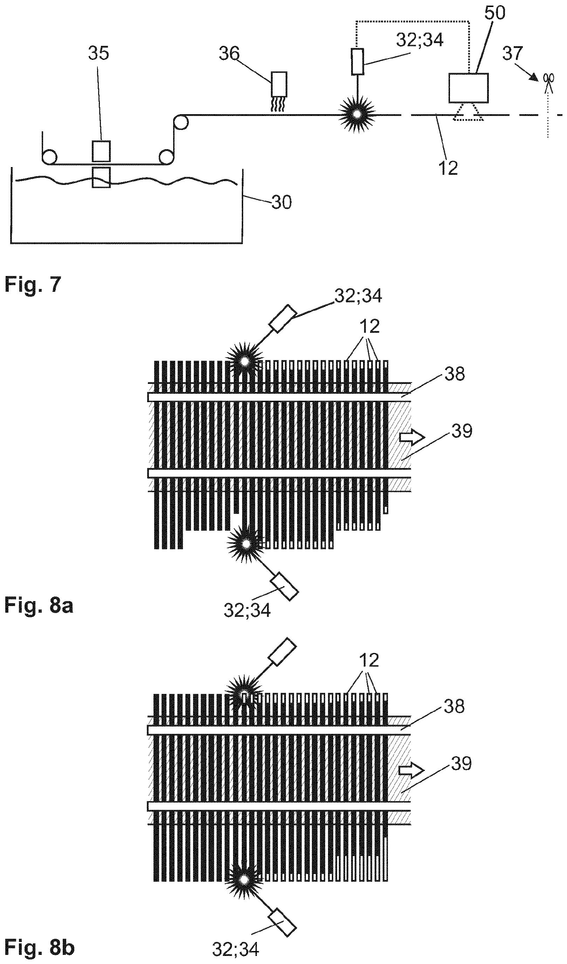

Das mit dem erfindungsgemäßen Verfahren hergestellte Produkt, also die Litze bzw. die Formlitze sowie eine elektrische Maschine mit einer derartigen Litze sind in den Figuren 1 bis 6 dargestellt. Erfindungsgemäße Ausführungsbeispiele des Herstellungsverfahrens sowie der Vorrichtung zur Herstellung der Litze sind in den Figuren 7 bis 12 gezeigt. Die Litze bzw. die elektrische Maschine mit der Litze werden als solche offenbart und beansprucht.

Bei der Litze 10 gemäß Fig. 1 kann es sich um eine Gesamtlitze handeln, die aus mehreren Leitungen, d.h. aus mehreren Einzeldrähten 12 aufgebaut ist, die jeweils isoliert sind. Fig. 1 kann auch als Beispiel für eine Teillitze 18 dienen, die Bestandteil einer größeren, übergeordneten Gesamtlitze 10 ist. Die Teillitze 18 ist ebenfalls aus Einzeldrähten 12 aufgebaut. Die Verdrillungsrichtung der Einzeldrähte 12 ist beispielhaft durch den im Uhrzeigersinn verlaufenden Pfeil angedeutet. Die Litze 10 bzw. Teillitze 18 ist aus mehreren Lagen 20, 21, 22 von Einzeldrähten 12 aufgebaut, die aus Gründen der Darstellung unterschiedlich schraffiert sind. Die innerste Lage 20, auch Lage 1 genannt, wird durch einen sogenannten Seelendraht gebildet. Die hier zweite Lage 21 ist um den Seelendraht angeordnet und in dem Beispiel gemäß Fig. 1 aus 6 Einzeldrähten 12 gebildet. Die dritte Lage 22 ist um die zweite Lage 21 herum angeordnet und ebenfalls durch Einzeldrähte 12, konkret durch 12 Einzeldrähte 12 gebildet. Eine andere Anzahl von Lagen ist ebenso wie eine andere Anzahl von Einzeldrähten 12 pro Lage möglich.

Eine Litze 10 mit mehreren Teillitzen 18 ist in Fig. 2 gezeigt. Die Teillitzen 18 können in entgegengesetzte Richtungen verdrillt sein. Die gesamte Litze 10 ist wiederum in eine Richtung verdrillt, sodass sich insgesamt eine mehrfache Verdrillung der Einzeldrähte 12 bzw. der Teillitzen 18 ergibt.

Fig. 3 zeigt die gesamte Litze 10 mit dem kopfseitigen Kontaktbereichen 15 an beiden Enden der Litze 10. Im Kontaktbereich 15 sind die Einzeldrähte 12 und/oder die Teillitzen 18 durch geeignete Mittel bzw. Verfahren elektrisch und mechanisch miteinander verbunden. Wie aus den Frontansichten gemäß Fig. 3 ersichtlich, sind die Kontaktbereiche 15 zu einem rechteckigen Querschnitt verpresst. Andere Querschnittsformen sind möglich. Die Litze 10 ist bei dem Beispiel gemäß Fig. 3 an beiden Längsenden verpresst bzw. weist dort Kontaktbereiche 15 auf. Es ist auch möglich, die Litze 10 nur an einem der beiden Längsenden zu Verpressen. Die obere Darstellung zeigt die Litze 10 ohne Hülse. Die untere Darstellung gemäß Fig. 3 zeigt die Litze 10 mit einer Hülse, die über den Kontaktbereich 15 geschoben ist.

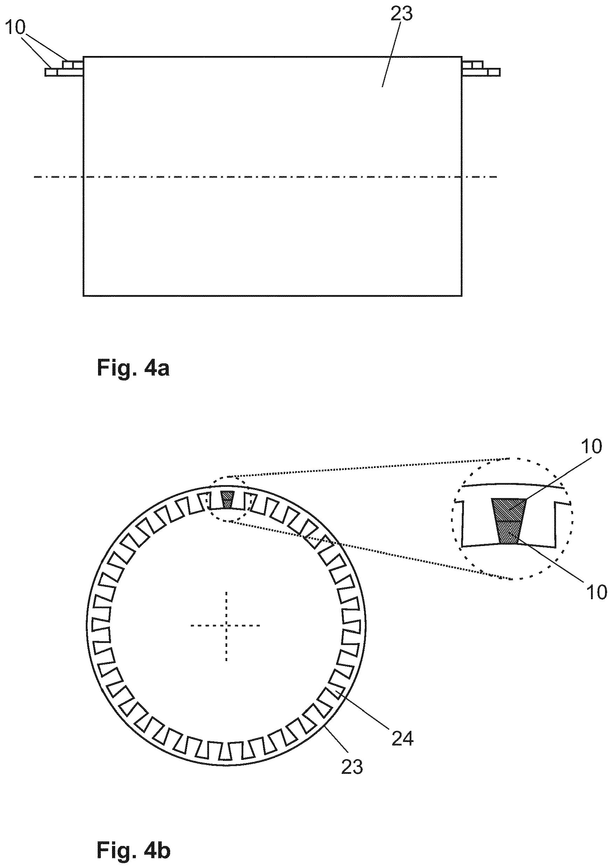

Figuren 4a, 4b zeigen eine Komponente einer elektrischen Maschine, die mit mehreren Litzen 10 gemäß Fig. 3 ausgestattet ist. Bei der Komponente kann es sich beispielsweise um den Stator 23 einer elektrischen Maschine handeln. Andere Bauteile, bei denen derartige Litzen 10 eingesetzt werden, sind möglich. Die Litzen 10 weisen unterschiedliche Längen auf. In Fig. 4b, insbesondere in der Detaildarstellung der Stator-Nuten 24 ist gut zu sehen, dass die Formlitzen denselben Querschnitt wie eine Stator-Nut 24 aufweisen. Der Querschnitt ist in dem Beispiel gemäß Fig. 4b trapezförmig. Andere Querschnittsformen sind möglich. Bei dem Beispiel gemäß Fig. 4b sind zwei Formlitzen 10 in ein und derselben Stator-Nut 24 angeordnet.

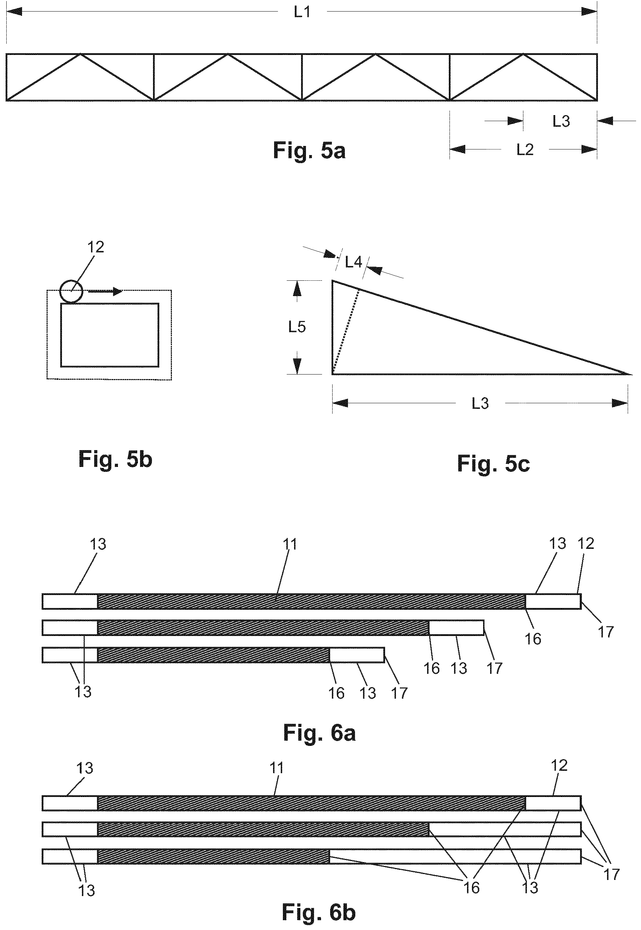

In Bezug auf elektrische Maschinen meint "aktive Länge" denjenigen Leitungsabschnitt einer Wicklung, welcher sich innerhalb magnetisch aktiver Teile befindet. Bei einem Stator entspricht die aktive Länge eines Segmentleiters wie z.B. einer Formlitze, dem Abschnitt des Segmentleiters, welcher sich innerhalb einer Statornut befindet. Nicht-aktive Längenanteile befinden sich dementsprechend außerhalb der Statornut. Fig. 5a-c und 6a-b veranschaulichen die Problematik, die entsteht, wenn Einzeldrähte 10 oder Teillitzen 18 vor der Verdrillung abisoliert werden.

Fig. 5a stellt schematisch die Wicklungen eines Einzeldrahtes 12 dar, der sich entlang eines Außenumfangs eines Leiterabschnitts mit Länge L1 windet. Eine vollständige Windung des Drahtes bezeichnet man als Schlag, eine halbe Windung des Drahtes einen halben Schlag bzw. Halbschlag. Die Längen L2 und L3 geben die Schlag- bzw. Halbschlaglänge an, wobei diese Längen sich nicht auf die tatsächliche Länge des Einzeldrahtes 12 beziehen, sondern auf die "effektive" Länge parallel zum Leiterverlauf.

Fig. 5b zeigt in Draufsicht näherungsweise den zusätzlichen Umweg, den ein Einzeldraht 12 während einer Schlaglänge L3 zurücklegen muss als gepunktete Linie. Das durchgezogene Viereck stellt den Leiterkern dar, um welchen sich der gezeigte Einzeldraht 12 herumwindet.

Fig. 5c zeigt die Längendifferenz L4 (Fig. 5c) zwischen dem direkten Weg (z.B. eines Seelendrahtes), d.h. der Halbschlaglänge L3, und dem einen halben Schlag aufweisenden Einzeldraht. Waagrecht eingezeichnet ist die Halbschlaglänge L3. Senkrecht eingezeichnet ist der halbe Umfang L5 des Leiterkerns. Die Verbindungslinie ist (wegen des nicht berücksichtigten Drahtdurchmesser nur in erster Näherung) die resultierende Länge des Einzeldrahtes zum Zurücklegen einer Halbschlaglänge. Das Lot des direkten Weges auf die resultierende Länge verdeutlicht die Längendifferenz.

Die unterschiedlichen Lagen 20, 21, 22 (vgl. Fig.1) weisen unterschiedliche Längen auf.

Fig. 6 a, b zeigen die zwei Optionen, einen verdrillten Litzdraht herzustellen, dessen Enden bündig abschließen.

Gemäß Fig. 6a werden die Einzeldrähte 12 bzw. die Teillitzen 18 für die verschiedenen Lagen 20, 21, 22 (siehe Fig. 1) in unterschiedlichen Längen hergestellt. Die Einzeldrähte 12 bzw. die Teillitzen 18 werden entlang gleich langer Teillängen 13 abisoliert. Die Teillängen 13 der unterschiedlich langen Einzeldrähte 12 sind also gleich lang und auf Grund der unterschiedlich langen Einzeldrahtlängeversetzt zueinander. Die Länge der Einzeldrähte 12 bzw. Teillitzen 18 gemäß Fig. 6a ist so bemessen, dass die nicht isolierten Teillängen 13 im verdrillten Zustand auf derselben Höhe angeordnet sind und so den Kontaktbereich 15 der Litze bilden. Konkret sind die Teillängen 13 so angeordnet, dass die bei der Fertigung in Transportrichtung der Teillitzen 18 bzw. Einzeldrähte 12 hinteren Enden 16 und die in Transportrichtung vorderen Enden 17 jeweils bündig übereinander angeordnet sind. Die Transportrichtung verläuft in Figuren 6a, 6b von links nach rechts. Mit anderen Worten bilden die vorderen Enden 17 eine Abschlusskante der Litze bzw. der Teillitze 18 bzw. der Einzeldrähte 12. Am anderen Ende der Einzeldrähte 12 bzw. Teillitzen 18 sind ebenfalls nicht isolierten Teillängen 13 angeordnet, die an beiden Enden der Teillängen 13 bündig abschließen.

Zwischen den Teillängen 13 an beiden Seiten eines Einzeldrahtes 12 bzw. der Teillitze 18 ist die Isolierschicht 11 aufgebracht.

Gemäß Fig. 6b sind die Einzeldrähte 12 bzw. Teillitzen 18 gleich lang. Die Teillängen 13 an einem Ende der Einzeldrähte 12 bzw. Teillitzen 18 sind unterschiedlich lang. Die Länge der Teillänge 13 des innersten Einzeldrahtes 12 für die erste Lage 20 ist am längsten. Die Länge der Teillängen 13 nimmt radial nach außen hin (bezogen auf die Litze 10) ab. Die äußerste Teillänge 13 bzw. die Teillänge 13 des äußersten Einzeldrahtes 12 die kürzeste Teillänge 13. Beim Verdrillen werden die Anfangskanten 16 der abisolierten Teillängen 13 bündig übereinander zu liegen kommen. Die Endkanten 17 der Drähte 12 werden nicht bündig miteinander abschließen, so dass hier zusätzlich geschnitten werden muss und Abfall entsteht.

Auf der anderen Seite der Einzeldrähte 12 bzw. 18 sind die Teillängen 13, die nicht isoliert sind, gleich lang.

Fig. 7 zeigt ein Ausführungsbeispiel für eine Vorrichtung zum Herstellen von Litzen, konkret eine Einzeldrahtfertigungslinie. Dabei werden üblicherweise mehrere Einzeldrähte gleichzeitig gefertigt. Zur Behandlung der Einzeldrähte werden diese vereinzelt. Darunter wird ein Herstellungsschritt verstanden, bei dem die Einzeldrähte 12 voneinander so beabstandet werden, dass die Behandlung der Einzeldrähte 12 im Wesentlichen individuell erfolgt.

Die Vorrichtung weist eine Einrichtung 30 zum Aufbringen eine Isolierschicht 11 auf den Einzeldraht 12 auf. Konkret handelt es sich dabei um ein Isolationsbad, durch das der Einzeldraht 12 zum Aufbringen der aus Lack bestehenden Isolierschicht 11 geführt wird. Hierfür sind geeignete Mittel 35 vorgesehen, die eine gleichmäßige Beschichtung des Einzeldrahtes 12 in an sich bekannter Weise vornehmen. Der Einzeldraht 12 wird dann durch eine Trockeneinrichtung 36 geführt. Der getrocknete Einzeldraht 12 wird dann in einer Einrichtung 32 zum Entfernen der Isolierschicht 11 partiell abisoliert. Dazu sind entsprechende Mittel 34 zum individuellen Entfernen der Isolierschicht 11 entlang einer Teillänge 13 der Einzeldrähte 12 vorgesehen. Die Mittel 34 zum individuellen Entfernen der Isolierschicht 11 können eine Lasereinrichtung umfassen. Der Einzeldraht 12 wird dann durch eine Einrichtung 37 auf die hier gewünschte Länge zugeschnitten.

Dargestellt ist außerdem eine Synchronisationseinrichtung 50, welche die Lage und Länge der einzelnen abisolierten Teillängen 13 der Einzeldrähte 12, hier durch ein bildgebendes Verfahren dargestellt, feststellt. Die Synchronisationseinrichtung 50 gibt je nach Lage und Länge der abisolierten Teilabschnitte relativ zueinander Steuerbefehle an die Einrichtung 32, um die Aktivität der Einrichtung 32 wunschgemäß anzupassen.

Bei der Vorrichtung gemäß Fig. 7 handelt es sich um eine Batch-Fertigung, die in den Figuren 8a, 8b in zwei Varianten dargestellt ist. Fig. 8a, 8b zeigen mehrere vereinzelt angeordnete Einzeldrähte 12, die auf einem Transportband 39 durch Fixiermittel 38 befestigt sind. Das Transportband 39 bewegt die vereinzelten Einzeldrähte 12 in der Einrichtung (in den Figuren von links nach rechts). Die beiden Lasereinrichtungen (Mittel 34) sind so angeordnet, dass diese die axialen Enden der Einzeldrähte 12 zum Abisolieren mit einem Laserstrahl beaufschlagen können. Bei der Variante gemäß Fig. 8a sind die Einzeldrähte 12 unterschiedlich lang, wie im Zusammenhang mit Fig. 6a näher beschrieben. Die Variante gemäß Fig. 8b betrifft eine Ausführungsform des Herstellungsverfahrens bei dem die Einzeldrähte 12 gleich lang sind. Die Teillängen 13 sind unterschiedlich lang.

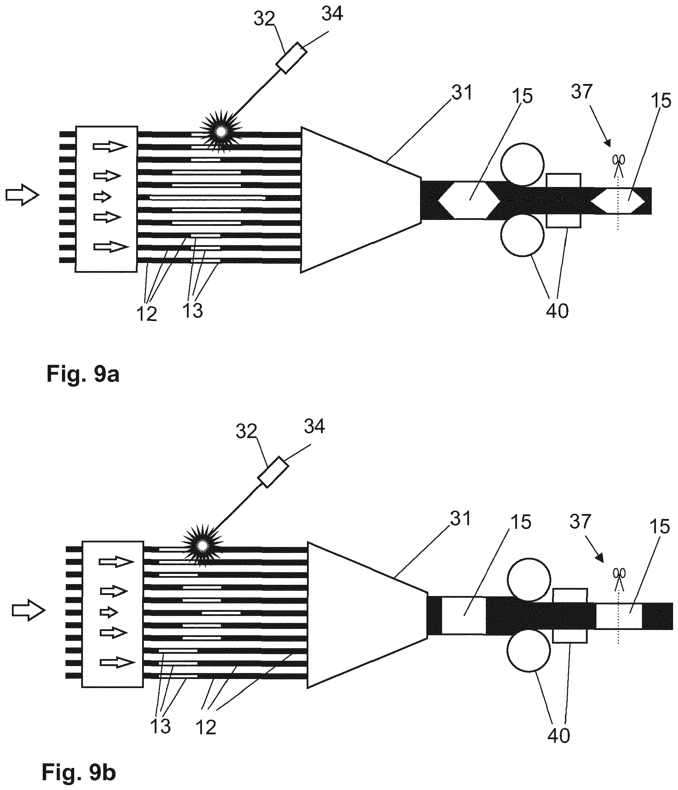

Fig. 9a zeigt eine Variante mit unterschiedlich langen Abisolationsbereichen (hier angedeutet für eine dreilagige Litze), die verdrillt und dann auf Länge zugeschnitten werden. Die Vorrichtung kann Rollwalzen 40 umfassen, um die verdrillte Litze in eine gewünschte Außenkontur zu bringen und/oder zusätzlich zu komprimieren. Alle Drähte laufen am Ausgang der Verdrillungseinrichtung bzw. allgemein der Einrichtung zum Zusammenführen 31 mit gleicher Geschwindigkeit, so dass (näherungsweise) ein entsprechendes V-Muster (bei entsprechenden Längsschnitt durch die Litze) im Abisolationsbereich der verdrillten Litze entsteht. Der V-Bereich ist Abfallprodukt in dem Sinne, dass er nicht als Kontaktierbereich genutzt werden kann (wegen des Restlacks) und auch nicht als Isolationsabschnitt zwischen Kontaktierbereich und aktiver Länge (wegen der partiell fehlenden Isolierung). Dies erhöht die "Brutto-Länge" der Formlitze. Gleichwohl sind die Anforderungen an die Präzision der Abisolationsabschnitte geringer als bei den nachfolgenden Fertigungsprozessen, da die Überlappbereiche sowohl für den Beginn als auch das Ende der Abisolation großzügig gewählt werden können. Hier dargestellt ist ein Verfahren, bei welchem geringe Anforderungen an die Synchronisation der Einzeldrähte gestellt werden.

Fig. 9b zeigt eine Variante des Verfahrens gemäß Fig. 9a, bei welcher die gleichlangen Abisolationsabschnitte (Teillängen 13) so präzise gesetzt werden müssen, dass sie beim Verdrillen bündig übereinander zu liegen kommen. Aufgrund der notwendigen Präzision/Synchronisation ist hier ein präzises und reaktionsschnelles Abisolierverfahren wie das Laserverdampfen besonders vorteilhaft. (Die Pfeile deuten die unterschiedlichen Zuführgeschwindigkeiten der Einzeldrähte (oder Teillitze) jeder Lage an, bei der die Einzeldrähte mit einer Differenzgeschwindigkeit laufen, die geeignet ist, die Längendifferenz der verschiedenen Drähte je Lage auszugleichen, so dass Anfang und Ende der Isolationsabschnitte bündig übereinander zu liegen kommen.

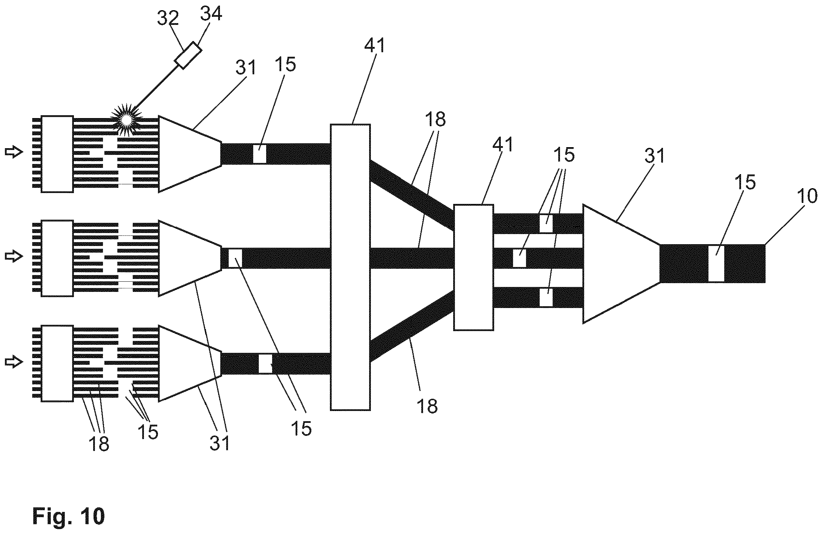

Fig. 10 zeigt ein weiteres Ausführungsbeispiel einer Fertigungsvariante einer Formlitze, die aus Teillitzen 18 zusammengesetzt ist. Das Verfahren gemäß Figur ziehen überträgt das Prinzip des Verfahrens gemäß Fig. 9b von der Litzenherstellung aus Einzeldrähten 12 auf die Litzenherstellung durch Teillitzen 18. Dabei werden anstelle der Einzeldrähte 12 Teillitzen 18 mit entsprechenden Kontaktierungsbereichen 15 zusammengeführt, um letztendlich eine finale Litze 10 zu bilden, die einen einzigen Kontaktbereich 15 bzw. zwei Kontaktbereiche 15 an beiden Enden der Litze aufweist. Beispielhaft dargestellt ist ein zweistufiges Verfahren zum Herstellen einer Litze zweiten Grades. Mit Bezugszeichen 41 sind Führungseinrichtungen versehen, die eine parallele Zuführung der Teilleiter in eine Einrichtung zum Zusammenführen 31 besorgen. Es ist möglich, dass das Verfahren gemäß den Figuren 9a bzw. 9b als Teilschritt im Verfahren gemäß Figur 10 ausgeführt wird, z.B. dem hier dargestellten Verfahren das Verfahren aus Figuren 9a bzw. 9b vorzuschalten. Gleichermaßen ist es möglich, das Verfahren aus Figuren 9a bzw. 9b zwischen- oder nachzuschalten. Dies bedeutet z.B., dass eine Teillitze 18 in der Funktion als Seelendraht mit weiteren Einzeldrähten außenumfänglich verwunden wird. Inbegriffen ist aber auch die Möglichkeit einen Einzelleiter 12 in der Funktion als Seelendraht mit mehreren Teillitzen außenumfänglich zu umwinden. Naheliegende Variationen des hier gezeigten Beispiels sind dem Fachmann hiermit angedeutet.

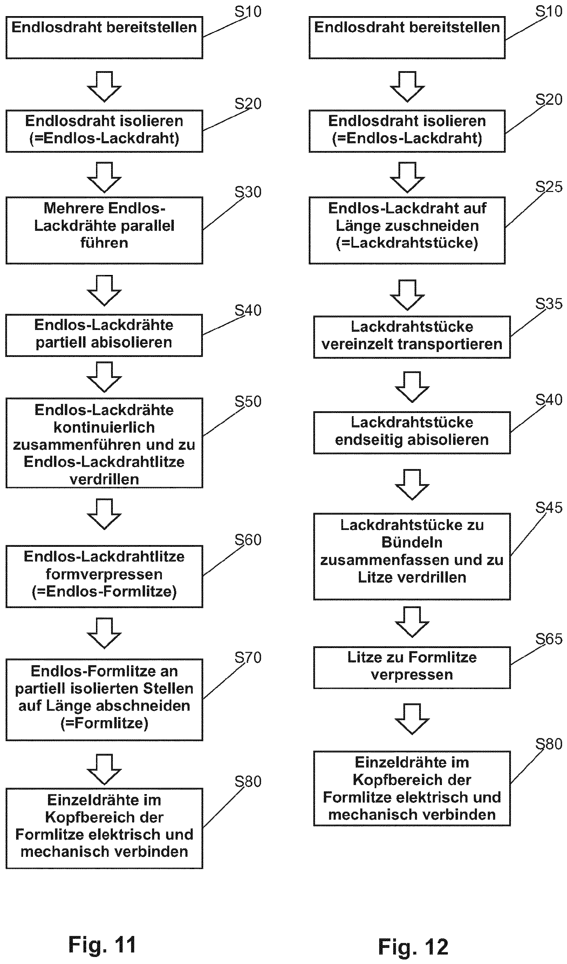

Fig. 11 und 12 verdeutlichen die Abfolge zweier beispielhafter Herstellungsprozesse. Fig. 11 stellt eine Prozessfolge mit kontinuierlicher Fertigung, Fig. 12 eine Prozessfolge mit Batch-Fertigung dar. Für beide Herstellungsprozesse werden Drähte als Endlosdrähte, z.B. in Spulenform, bereit gestellt (S10) und z.B nach dem in Fig. 7 gezeigten Teilverfahren isoliert (S20). Mehrere Drähte werden nach dem Verfahren aus Fig. 11 sodann analog Figuren 9a bzw. 9b parallel geführt (S30), so dass die Drahtabschnitte zwar in zusammenhängender Form, aber vereinzelt vorliegen und einzeln an den gewünschten Stellen abisoliert werden können (S40). Die so präparierten Einzeldrähte werden in einer oder mehreren Verdrillungs- oder Verseileinrichtungen zu einer Litze derart verseilt (S50), dass sie klar abgegrenzte Kontaktabschnitte aufweisen. Anschließend wird die Endlos-Lackdrahtlitze in einem für die kontinuierliche Fertigung geeigneten Verfahren, z.B. Rollwalzen, verdichtet und in eine gewünschte Außenkontur gebracht (S60). Die sodann vorliegende Endlos-Formlitze werden in der Mitte der an den durch die partielle Abisolierung bereitgestellten Kontaktstellen durchtrennt, um Formlitzen mit beidseitig vorliegenden Kontaktstellen zu erzeugen (S70). Anschließend werden die Einzeldrähte im Kontaktbereich elektrisch und mechanisch miteinander verbunden (S80). Die nun vorliegende Formlitze könnte nun in eine Nut eines Stators eingebracht werden.

Das Verfahren gemäß Fig. 12 unterscheidet sich vom Verfahren 11 in den Schritten S25,S35, S45 und S65. In S25 wird ein Endlosdraht z.B. auf eine oder mehrere Längen gemäß den Ausführungen in Figuren 6a oder 6b zugeschnitten, die Einzeldrähte oder Lackdrahtstücke werden vereinzelt (S35) und an den Enden über eine Teillänge abisoliert (S40). Eine gewisse Anzahl präparierter Einzeldrähte wird gebündelt und zu einer Litze verdrillt derart, dass endseitig ein klar definierter Kontaktbereich entsteht (S45). Dieser Teilschritt kann mehrfach wiederholt und hierarchisch gegliedert sein, um Litzen höherer Ordnung zu erzeugen. Die Litze wird dann formverpresst, z.B. in einer Hubpresse (S65). In Schritt S80 werden die Einzeldrähte im Kontaktbereich der Formlitze elektrisch und mechanisch verbunden. Der Schritt S80 kann dem Schritt S65 vor- oder nachgelagert sein. Vorteile der erfindungsgemäßen Lösung sind insbesondere:
- ein einheitliches Qualitätsniveau aller Formlitzen
- eine erhöhte Prozesssicherheit bei gleichbleibender Qualität
- verbesserter thermischer, elektrischer und mechanischer Kontakt
- kürzere Taktzeiten, da die notwendigen Kontaktkräfte, -zeiten und - soweit gegeben - Schweißströme für die Verbindung des Kopfbereiches aufgrund fehlender Isolierung geringer ausfallen können
- weniger Ressourceneinsatz, insbesondere wenn ein Abschneiden von Endabschnitt mit Lacküberstand entfällt
- Verbesserte Weiterverarbeitbarkeit für die Verbindung zu Leiterschleifen:
   Durch einen höheren Kompaktierungsgrad des Kopfendes, damit einhergehend eine kleinere Kopfgeometrie und in letzter Konsequenz damit eine erhöhte Zugänglichkeit bei der Montage z.B. für ein Anbringen von Verschaltungsstegen
- Bauraumverkürzung I: Weniger Wärmeintrag in kritische Bereiche und dadurch Formlitzenverkürzung bei gleicher Isolationsleistung: Durch niedrigere Verarbeitungsbelastungen (Stromstärke, -zeit, kraft) erfolgt geringere Wärmeentwicklung, wodurch die Hauptisolation sowie die Einzeldrahtisolation einer Formlitze in Richtung aktiver Länge, d.h. in Richtung Statornut, weniger angegriffen wird und damit der Sicherheitsabstand zwischen Kopfende und aktiver Länge der Formlitze verkürzt werden kann. (Die mögliche Bauraumverkürzung ist massiv und bewegt sich im Bereich von einigen mm; der bisherige Wärmeeintrag führte zu Versprödungszonen unterhalb der Hülsen von rund 6mm auf jeder Seite der Formlitze, die keine zuverlässige Isolation mehr gewährleisteten)
- Bauraumverkürzung II: Eine Bauraumverkürzung bei Verwendung von Hülsenlaschen oder -fahnen, da die Lackreste in keinem separaten "Totraum" aufgefangen werden müssen, der die Hülsenlänge vergrößern würde - die Lackreste sind aufgrund ihres Kohlenstoffgehalts leitfähig und dürfen daher weder in den aktiven Teil (Statornut) gelangen noch einen Kontakt zu anderen Leiterelementen herstellen oder Kontaktelemente verschmutzen.

Bei trennscharfer Abgrenzung von isoliertem und nicht-isoliertem Bereichen der Formlitze folgt mitunter:
- Bauraumverkürzung III: Bei bündigem Abschnitt der Lackisolierungen aller Einzeldrähte einer Formlitze kann kürzer gebaut werden, da der Abstand von (Statorende) - (Isolationsende des Einzeldrahts) sowie (Isolationsende Einzeldraht) - (Ende Einzeldraht = Ende Formlitze) für alle Einzeldrähte gleich ist. Damit kann die minimale Isolationslänge (von Ende aktiver Länge bis Beginn abisolierter Lackdraht) für die Kriechstromfestigkeit bzw. Überschlagsfestigkeit und zugleich die minimale Kontaktierungslänge (Beginn abisolierter Lackdraht bis Ende Lackraht = Ende Formlitze gewählt werden. Dies ist bei Verdrillung aufgrund der ungleichen Einzeldrahtlängen sonst nicht gegeben.

Bevorzugtes Ausführungsbeispiel der Erfindung ist die kontinuierliche Fertigung nach Fig. 9b bzw. Fig. 11.

## Patentansprüche

1. Verfahren zum Herstellen von Litzen (10) mit den Schritten
a) Aufbringen einer Isolierschicht (11) auf Leitungen (12, 18)
b) Vereinzeln der isolierten Leitungen (12, 18)
c) Individuelles Entfernen der Isolierschicht (11) von den vereinzelten Leitungen (12, 18) entlang einer Teillänge (13) der Leitungen (12, 18) und
d) Zusammenführen der Leitungen (12, 18) zur Bildung einer Litze (10), wobei die Teillängen (13) zumindest abschnittsweise auf derselben Höhe zur Bildung eines nicht isolierten Kontaktbereiches (15) angeordnet werden.

2. Verfahren nach Anspruch 1
**dadurch gekennzeichnet, dass**
die Schritte a) bis d) im kontinuierlichen Betrieb erfolgen.

3. Verfahren nach Anspruch 1
**dadurch gekennzeichnet, dass**
wenigstens die Schritte c) und d) im Batchbetrieb erfolgen.

4. Verfahren nach einem der vorhergehenden Ansprüche
**dadurch gekennzeichnet, dass**
das individuelle Entfernen gemäß Schritt c) eine Laserablation der Isolierschicht (11), insbesondere Laserverdampfen der Isolierschicht (11) umfasst.

5. Verfahren nach einem der vorhergehenden Ansprüche
**dadurch gekennzeichnet, dass**
beim individuellen Entfernen gemäß Schritt c) die Leitungen (12, 18) seitlich voneinander beabstandet angeordnet werden.

6. Verfahren nach einem der vorhergehenden Ansprüche
**dadurch gekennzeichnet, dass**
beim individuellen Entfernen gemäß Schritt c) unterschiedlich lange, nicht isolierte Teillängen (13) der Leitungen (12, 18) gebildet werden, wobei die unterschiedlich langen, nicht isolierten Teillängen (13) der Leitungen (12, 18) insbesondere durch unterschiedliche Transportgeschwindigkeiten der Leitungen (12, 18) beim Entfernen gebildet werden.

7. Verfahren nach einem der vorhergehenden Ansprüche 1 bis 5
**dadurch gekennzeichnet, dass**
beim individuellen Entfernen gemäß Schritt c) gleich lange, nicht isolierte Teillängen (13) der Leitungen (12, 18) gebildet werden, die versetzt angeordnet werden.

8. Verfahren nach einem der vorhergehenden Ansprüche
**dadurch gekennzeichnet, dass**
das Zusammenführen der Leitungen (12, 18) gemäß Schritt d) ein Verseilen der Leitungen (12, 18) umfasst.

9. Verfahren nach einem der vorhergehenden Ansprüche
**dadurch gekennzeichnet, dass**
das Zusammenführen der Leitungen (12, 18) gemäß Schritt d) ein Formverpressen zur Bildung einer Formlitze umfasst.

10. Verfahren nach einem der vorhergehenden Ansprüche
**dadurch gekennzeichnet, dass**
beim Zusammenführen der Leitungen (12, 18) gemäß Schritt d) die in Transportrichtung der Leitungen (12, 18) hinteren Enden (16) der nicht isolierten Teillängen (13) bündig angeordnet werden.

11. Verfahren nach einem der vorhergehenden Ansprüche
**dadurch gekennzeichnet, dass**
beim Zusammenführen der Leitungen (12, 18) gemäß Schritt d) die in Transportrichtung der Leitungen (12, 18) vorderen Enden (17) der nicht isolierten Teillängen (13) bündig angeordnet werden, wobeidie in Transportrichtung der Leitungen (12, 18) vorderen Enden (17) der nicht isolierten Teillängen (13) den Beginn einer neuen Litze (10) bilden.

12. Verfahren nach einem der vorhergehenden Ansprüche
**dadurch gekennzeichnet, dass**
die Leitungen (12, 18) mehrere Einzeldrähte (12) und/oder Teillitzen (18) umfasst.

13. Vorrichtung zum Herstellen von Litzen gemäß einem Verfahren nach einem der Ansprüche 1 bis 12 mit
- einer Einrichtung (30) zum Aufbringen einer Isolierschicht (11) auf Leitungen (12, 18)
- einer Einrichtung (31) zum Zusammenführen der Leitungen (12, 18) zur Bildung einer Litze (10) und
- einer Einrichtung (32) zum Entfernen der Isolierschicht (11) von den Leitungen (12, 18) entlang einer Teillänge (13) der Leitungen (12, 18)
**dadurch gekennzeichnet, dass**
eine Einrichtung (33) zum Vereinzeln der isolierten Leitungen (12, 18) vorder Einrichtung (32) zum Entfernen der Isolierschicht (11) angeordnet ist und die Einrichtung (32) zum Entfernen der Isolierschicht Mittel (34) zum individuellen Entfernen der Isolierschicht (11) von den vereinzelten Leitungen (12, 18) entlang einer Teillänge (13) der Leitungen (12, 18) aufweist, wobei die Einrichtung (31) zum Zusammenführen der Leitungen (12, 18) und die Einrichtung (32) zum Entfernen der Isolierschicht derart zusammenwirken, dass die Teillängen (13) der Leitungen (12, 18) zumindest abschnittsweise auf derselben Höhe zur Bildung eines nicht isolierten Kontaktbereiches (15) angeordnet werden.

14. Litze hergestellt nach dem Verfahren gemäß einem der Ansprüche 1 bis 12, mit Leitungen (12, 18), die jeweils eine Isolierschicht (11) aufweisen und auf einer Teillänge (13) jeweils nicht isoliert sind, wobei die nicht isolierten Teillängen (13) einen Kontaktbereich (15) bilden, an dem die Leitungen (12, 18) elektrisch leitend miteinander verbunden sind, und die Isolierschicht (11) entlang der Teillängen (13) individuell für jede Leitung (12, 18) vor dem Zusammenfügen der Leitungen (12, 18) zu einer Litze entfernt ist.

15. Elektrische Maschine mit magnetischen Bauteilen aufweisend zumindest eine Litze nach Anspruch 14 in Aufnahmeöffnungen eines Rotors und/oder Stators.

## Claims

1. A method for producing stranded wires (10), comprising the steps of
a) applying an insulation layer (11) to lines (12, 18)
b) separating the insulated lines (12, 18)
c) individually removing the insulation layer (11) from the separated lines (12, 18) along a partial length (13) of the lines (12, 18) and
d) bringing the lines (12, 18) together for the purpose of forming a stranded wire (10), wherein the partial lengths (13) are arranged at the same level at least in sections for the purpose of forming a noninsulated contact region (15).

2. The method as claimed in claim 1, **characterized in that** steps a) to d) take place continuously.

3. The method as claimed in claim 1, **characterized in that** at least steps c) and d) take place batchwise.

4. The method as claimed in one of the preceding claims, **characterized in that** the individual removal in accordance with step c) comprises laser ablation of the insulation layer (11), in particular laser evaporation of the insulation layer (11).

5. The method as claimed in one of the preceding claims, **characterized in that** the lines (12, 18) are arranged laterally spaced apart from one another during the individual removal in accordance with step c).

6. The method as claimed in one of the preceding claims, **characterized in that** different-length, non-insulated partial lengths (13) of the lines (12, 18) are formed during the individual removal in accordance with step c), wherein different-length, non-insulated partial lengths (13) of the lines (12, 18) are formed owing to different transportation speeds of the lines (12, 18) in the event of removal during the individual removal in accordance with step c).

7. The method as claimed in one of the preceding claims 1 to 5, **characterized in that** equal-length, non-insulated partial lengths (13) of the lines (12, 18), which partial lengths are arranged in an offset manner, are formed during the individual removal in accordance with step c).

8. The method as claimed in one of the preceding claims, **characterized in that** bringing the lines (12, 18) together in accordance with step d) comprises stranding the lines (12, 18).

9. The method as claimed in one of the preceding claims, **characterized in that** bringing the lines (12, 18) together in accordance with step d) comprises compression molding for the purpose of forming a shaped stranded wire.

10. The method as claimed in one of the preceding claims, **characterized in that** the ends (16) of the non-insulated partial lengths (13) that are at the rear in the transportation direction of the lines (12, 18) are arranged flush when the lines (12, 18) are brought together in accordance with step d).

11. The method as claimed in one of the preceding claims, **characterized in that** the ends (17) of the non-insulated partial lengths (13) that are at the front in the transportation direction of the lines (12, 18) are arranged flush when the lines (12, 18) are brought together in accordance with step d), wherein the ends (17) of the non-insulated partial lengths (13) that are at the front in the transportation direction of the lines (12, 18) form the start of a new stranded wire (10).

12. The method as claimed in one of the preceding claims, **characterized in that** the lines (12, 18) comprises a plurality of individual wires (12) and/or partial stranded wires (18).

13. An apparatus for producing stranded wires according to a method claimed in one of the preceding claims 1 to 12, comprising
- a device (30) for applying an insulation layer (11) to lines (12, 18)
- a device (31) for bringing the lines (12, 18) together for the purpose of forming a stranded wire (10) and
- a device (32) for removing the insulation layer (11) from the lines (12, 18) along a partial length (13) of the lines (12, 18),
**characterized in that** a device (33) for separating the insulated lines (12, 18) is arranged upstream of the device (32) for removing the insulation layer (11), and the device (32) for removing the insulation layer has means (34) for individually removing the insulation layer (11) from the separated lines (12, 18) along a partial length (13) of the lines (12, 18), wherein the device (31) for bringing the lines (12, 18) together and the device (32) for removing the insulation layer interact in such a way that the partial lengths (13) of the lines (12, 18) are arranged at the same level at least in sections for the purpose of forming a non-insulated contact region (15).

14. A stranded wire produced according to a method as claimed in one of the preceding claims 1 to 12 comprising lines (12, 18) which each have an insulation layer (11) and are each non-insulated over a partial length (13), wherein the non-insulated partial lengths (13) form a contact region (15) at which the lines (12, 18) are electrically conductively connected to one another, and the insulation layer (11) is removed along the partial lengths (13) individually for each line (12) before the lines (12, 18) are joined to form a stranded wire.

15. An electric machine comprising at least one stranded wire according to claim 14 in receiving openings of a rotor and/or a stator.

## Revendications

1. Procédé de fabrication de torons (10), comprenant les étapes consistant à :
a) appliquer une couche isolante (11) sur des lignes (12, 18),
b) séparer les lignes isolées (12, 18),
c) retirer, individuellement et sur une longueur partielle (13) des lignes (12, 18), la couche isolante (11) des lignes (12, 18) séparées et
d) rassembler les lignes (12, 18) afin de former un toron (10), dans lequel les longueurs partielles (13) sont agencées à la même hauteur au moins par sections afin de former une région de contact (15) non isolée.

2. Procédé selon la revendication 1,
**caractérisé en ce que**
les étapes a) à d) sont mises en oeuvre selon un mode de fonctionnement continu.

3. Procédé selon la revendication 1,
**caractérisé en ce que**
au moins les étapes c) et d) sont mises en œuvre selon un mode de fonctionnement discontinu.

4. Procédé selon l'une quelconque des revendications précédentes,
**caractérisé en ce que**
le retrait individuel à l'étape c) comprend une ablation par laser de la couche isolante (11), en particulier une évaporation par laser de la couche isolante (11).

5. Procédé selon l'une quelconque des revendications précédentes,
**caractérisé en ce que**
lors du retrait individuel à l'étape c), les lignes (12, 18) sont agencées de manière latéralement espacée les unes aux autres.

6. Procédé selon l'une quelconque des revendications précédentes,
**caractérisé en ce que**
lors du retrait individuel à l'étape c), des longueurs partielles (13), non isolées et de différentes longueurs, des lignes (12, 18) sont formées, dans lequel les longueurs partielles (13), non isolées et de différentes longueurs, des lignes (12, 18) sont formées lors du retrait en particulier grâce à des vitesses de transport différentes des lignes (12, 18).

7. Procédé selon l'une quelconque des revendications 1 à 5,
**caractérisé en ce que**
lors du retrait individuel à l'étape c), des longueurs partielles (13), non isolées et de même longueur, des lignes (12, 18) sont formées et sont agencées de manière décalée.

8. Procédé selon l'une quelconque des revendications précédentes,
**caractérisé en ce que**
le rassemblement des lignes (12, 18) à l'étape d) comprend un commettage des lignes (12, 18).

9. Procédé selon l'une quelconque des revendications précédentes,
**caractérisé en ce que**
le rassemblement des lignes (12, 18) à l'étape d) comprend un moulage par compression afin de former un toron profilé.

10. Procédé selon l'une quelconque des revendications précédentes,
**caractérisé en ce que**
lors du rassemblement des lignes (12, 18) à l'étape d), les extrémités (16), arrières dans la direction de transport des lignes (12, 18), des longueurs partielles (13) non isolées sont agencées au même niveau.

11. Procédé selon l'une quelconque des revendications précédentes,
**caractérisé en ce que**
lors du rassemblement des lignes (12, 18) à l'étape d), les extrémités (17), avants dans la direction de transport des lignes (12, 18), des longueurs partielles (13) non isolées sont agencées au même niveau, dans lequel les extrémités (17), avants dans la direction de transport des lignes (12, 18), des longueurs partielles (13) non isolées forment le début d'un nouveau toron (10).

12. Procédé selon l'une quelconque des revendications précédentes,
**caractérisé en ce que**
les lignes (12, 18) comprennent plusieurs fils individuels (12) et/ou torons élémentaires (18).

13. Dispositif permettant la fabrication de torons selon un procédé selon l'une quelconque des revendications 1 à 12, comprenant
- un appareil (30) permettant d'appliquer une couche isolante (11) sur des lignes (12, 18),
- un appareil (31) permettant de rassembler les lignes (12, 18) afin de former un toron (10), et
- un appareil (32) permettant de retirer la couche isolante (11) des lignes (12, 18) sur une longueur partielle (13) des lignes (12, 18),
**caractérisé en ce que**
un appareil (33) permettant de séparer les lignes (12, 18) isolées est agencé avant l'appareil (32) permettant de retirer la couche isolante (11), et l'appareil (32) permettant de retirer la couche isolante présente des moyens (34) permettant de retirer, individuellement et sur une longueur partielle (13) des lignes (12, 18), la couche isolante (11) des lignes (12, 18) séparées, dans lequel l'appareil (31) permettant de rassembler les lignes (12, 18) et l'appareil (32) permettant de retirer la couche isolante coopèrent de telle manière que les longueurs partielles (13) des lignes (12, 18) sont agencées à la même hauteur au moins par sections afin de former une région de contact (15) non isolée.

14. Toron fabriqué selon le procédé selon l'une quelconque des revendications 1 à 12, comprenant des lignes (12, 18) qui présentent respectivement une couche isolante (11) et ne sont respectivement pas isolées sur une longueur partielle (13), dans lequel les longueurs partielles (13) non isolées forment une région de contact (15) au niveau de laquelle les lignes (12, 18) sont reliées les unes aux autres de manière électriquement conductrice, et la couche isolante (11) est retirée le long des longueurs partielles (13) individuellement pour chaque ligne (12, 18) avant le rassemblement des lignes (12, 18) en un toron.

15. Machine électrique avec des composants magnétiques présentant au moins un toron selon la revendication 14 dans des orifices de réception d'un rotor et/ou d'un stator.
